## Europäisches Patentamt
## European Patent Office
## Office européen des brevets

(19)

(11) Veröffentlichungsnummer: **0 064 756**
**B1**

(12) # EUROPÄISCHE PATENTSCHRIFT

(45) Veröffentlichungstag der Patentschrift:
**03.09.86**

(21) Anmeldenummer: **82104038.3**

(22) Anmeldetag: **10.05.82**

(51) Int. Cl.⁴: **B 32 B 27/12,** B 32 B 31/24,
D 06 M 17/00

(54) **Flexibles Sandwich-Flächengebilde.**

(30) Priorität: **12.05.81 DE 3118701**

(43) Veröffentlichungstag der Anmeldung:
**17.11.82 Patentblatt 82/46**

(45) Bekanntmachung des Hinweises auf die Patenterteilung:
**03.09.86 Patentblatt 86/36**

(84) Benannte Vertragsstaaten:
**AT BE CH DE FR GB IT LI NL SE**

(56) Entgegenhaltungen:
**FR-A-1 436 860**
**FR-A-2 068 839**
**GB-A-994 914**
**GB-A-1 119 103**

(73) Patentinhaber: **METZELER SCHAUM GMBH,
Donaustrasse 51, D-8940 Memmingen (DE)**

(72) Erfinder: **Klein, Erhard, Elbenweg 14, D-7800
Freiburg (DE)**
Erfinder: **Kühnl, Rainer, Rosa- Hagen- Weg 15,
D-7830 Emmendingen (DE)**
Erfinder: **Baatz, Günther, Dr. Dipl.- Chem.,
Zimmermannstrasse 2, D-8941 Buxheim (DE)**
Erfinder: **Seifert, Peter, Dr. Dipl.- Chem., August-
Kierspel- Strasse 161, D-5060 Bergisch- Gladbach
(DE)**

(74) Vertreter: **Michelis, Theodor, Dipl.- Ing.,
Gneisenaustrasse 15, D-8000 München 50 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung besteht in einem flexiblen Sandwich-Fächengebilde, bestehend aus einer Hochfrequenz-schweißfähigen Schaumstoff-Kernschicht, auf der beiderseits Deckschichten angeordnet sind, von denen mindestens eine aus einem Hochfrequenz-schweißfähigen, textilen Flächengebilde mit einem Anteil von mindestens 20 Gewichtsprozent eines Garns aus synthetischen Spinnfasern und/oder Filamenten aus Vinylpolymeren und/oder -Copolymeren besteht, dessen Erweichungspunkt mindestens 50°C niedriger liegt als der Erweichungspunkt des restlichen Garns, wobei die Kettfäden des textilen Flächengebildes aus Filamentgarnen des höher schmelzenden Materials bestehen.

Aus der GB-A-994 914 sowie der GB-A-1 119 103 sind flexible Sandwich-Flächengebilde bekannt, bei denen sowohl die Kett- als auch die Schußfäden aus gemischten Garnen bestehen, d.h. aus einer Mischung aus niedrigschmelzenden und hochschmelzenden Fasern. Bei derartigen Fasern besteht bei einer HF-Verschweißung die Gefahr, daß sich durch Wegschmelzen des niedrigschmelzenden Anteils die Fäden bzw. das Garn selbst auflösen.

Wenn demgegenüber bei dem Flächengebilde nach der vorliegenden Anmeldung lediglich die Schußfäden einen niedrigschmelzenden Anteil enthalten, während die Kettfäden aus den Filamentgarnen des höherschmelzenden Materials bestehen, so wird dadurch erreicht, daß bei einer HF-Verschweißung die Fäden des hochschmelzenden Garns vollständig stehenbleiben und damit zur Verstärkung bzw. Verankerung von plastifiziertem Material im Bereich der HF-Schweißnaht beitragen.

In Weiterbildung der Erfindung kann auf die Hochfrequenz-schweißfähige Deckschicht ein weiteres Flächengebilde mittels Hochfrequenzenergie aufgeschweißt und auf der o.g. Deckschicht hierdurch verankert sein. Dieses weitere Flächengebilde besteht zweckmäßigerweise aus einem textilen Flächengebilde oder einer Kunststoffolie oder einer Kombination aus beiden und ist als Halte- oder Befestigungsmittel ausgebildet, wie es beispielsweise zur Befestigung von Sitz- oder Polsterauflagen auf dem Sitzrohling für Sitze in der Automobil-Industrie erforderlich ist.

Der restliche textile Anteil der Hochfrequenz-schweißfähigen Deckschicht kann aus Spinnfasern und/oder Filamenten auf synthetischer oder natürlicher Grundlage bestehen. Voraussetzung für diese Spinnfasern und Filamente ist jedoch, daß sie beim Hochfrequenz-Schweißvorgang keine wesentlichen Festigkeitseinbußen erleiden. Durch die Möglichkeit, nach der Erfindung eine niedrigere Energie-Beaufschlagung beim Hochfrequenz-Schweißvorgang einzusetzen, um eine gute Verbindung der Materialien im Bereich der HF-Schweißnaht zu erzeugen, erhält man gegenüber bekannten Sandwich-Flächengebilden für den restlichen textilen Anteil der Hochfrequenz-schweißfähigen Deckschicht eine breitere Auswahl an einsetzbaren Spinnfasern und Filamenten.

Ganz allgemein gilt, daß man für beide Deckschichten durch die Möglichkeit der geringeren Energie-Beaufschlagung beim Hochfrequenz-Schweißvorgang gegenüber den bekannten Sandwich-Flächengebilden eine weitaus größere Auswahl an Materialien zur Verfügung hat.

Durch die Verwendung von Spinnfasern und/oder Filamenten aus Polyvinylchlorid, Polyvinylidenchlorid oder deren Copolymeren ergibt sich für das Sandwich-Flächengebilde darüberhinaus auch eine verringerte Entflammbarkeit.

Die Erfindung wird nachstehend anhand folgender Beispiele näher erläutert.

## Beispiel 1

Es wurde ein flexibles Sandwich-Flächengebilde aus folgenden Materialien hergestellt:

Obere Deckschicht:

Ein Wirkplüsch, bestehend aus 74 % Gew.-% Polyacrylnitril-Spinnfasergarn, 12 Gew.-% Polyamid-6.6-Fila-mentgarn, glatt und 16 Gew.-% Polyethylenterephthalat-Filamentgarn, glatt.

> > ochfrequenz-schweißfähige Schaumstoff-Kernschicht:

Ein Hochfrequenz-schweißfähiger Polyether-Polyurethan-Schaumstoff mit einer Rohdichte von 35 kg/m$^3$ und einer Ausgangsdicke von 8 mm. Der Schaumstoff ist flammkaschierbar auf handelsüblichen Flammkaschierauflagen.

> > ochfrequenz-schweißfähige untere Deckschicht:

Ein Raschel-Schußeintrag-Gewirk mit einem Flächengewicht von 70 g/m von folgender Konstruktion:

$L_3$: Polyethylenterephthalat-Filamentgarn 76 dtex f 22 z 20

$L_2$: Polyethylenterephthalat-Filamentgarn 76 dtex f 22 z 20

Legung $L_3$: 2-0/4-6/4-6/2-0//

Legung $L_2$: 2-0/2-0/4-6/4-6//

Einzug $L_3$: 1 leer: 1 voll

Einzug $L_2$: 1 voll: 1 leer

Schußeintragung: Nm 40/1 Polyvinylchlorid/nach-chloriertes Polyvinylchlorid 82,5 Gew.-%:17,5 Gew.-%

Die einzelnen Schichten wurden durch Flammkaschierung verbunden. Ein Zuschnitt aus diesem flammkaschierten flexiblen Sandwich-Flächengebilde wurde an einer Hochfrequenz-Schweißanlage (Kiefel G 400D, Leistung 4,3 KW) verschweißt.

Schweißbedingungen: Elektrode 400 x 2 mm Preßkraft 2500 Newton > > ochfrequenz-Spannung 900 Volt

Schweißzeit 5 Sekunden.

Unter den genannten Bedingungen wurde eine feste, glatte Schweißnaht erhalten.

Zur Prüfung werden 5 cm breite Streifen quer zur Schweißnaht ausgestanzt. Von diesen Streifen wird die obere Deckschicht mechanisch von der Schaumstoff-Kernschicht teilweise gelöst. Die Schaumstoff-Kernschicht mit der aufkaschierten, unteren Hochfrequenz-schweißfähigen Deckschicht wird gegen die obere Deckschicht in eine Zugprüfmaschine eingespannt. Bei konstantem Vorschub wird die Haftkraft zwischen der oberen Deckschicht und dem Rest des Sandwich-Flächengebildes im Bereich der Schweißnaht geprüft. Es wurden Schälfestigkeiten von 50 bis 60 New-ton/5 cm ermittelt.

**Beispiel 2**

Es wurde ein flexibles Sandwich-Flächengebilde wie im Beispiel 1 hergestellt.

Beim Hochfrequenz-Schweißvorgang wurde zusätzlich an der unteren Hochfrequenz-schweißfähigen Deckschicht ein Polyvinylchloridbeschichtetes Gewebe in doppelter Lage aufgeschweißt, so daß eine Halteschlaufe entstand.

Der Hochfreqenz-Schweißvorgang wurde unter den im Beispiel 1 beschriebenen Bedingungen durchgeführt.

Die Prüfung der Schälfestigkeit dieser Halteschlaufe gegen das restliche Sandwich-Flächengebilde unter den im Beispiel 1 genannten Prüfbedingungen ergab Werte von 110 bis 140 Newton/5 cm.

Wenn man für die im Beispiel 2 beschriebenen flexiblen Sandwich-Flächengebilde mit Halteschlaufe anstelle der dort genannten unteren Deckschicht eine Deckschicht aus einem textilen Flächengebilde ohne die Mitverwendung von niedrig erweichenden Spinnfasern und/oder Filamenten einsetzt, ergeben sich bei der Anwendung der im Beispiel 1 beschriebenen Schweiß- und Prüfbedingungen für die Schälfestigkeit zwischen Halteschlaufen und dem Sandwich-Flächengebilde die deutlich niedrigeren Werte von 30 bis 50 Newton/5 cm.

Solche Werte für die Schälfestigkeit zwischen Halteschlaufe und dem Sandwich-Flächengebilde entsprechen nicht den Anforderungen beispielsweise der Automobil-Industrie zur Befestigung von Sitz- oder Polsterauflagen auf dem Sitzrohling.

Dagegen eignet sich der Gegenstand der Erfindung für diese Zwecke hervorragend.

Darüberhinaus läßt sich das erfindungsgemäße Flächengebilde auch sehr gut als Polstermaterial in der Möbel-Industrie sowie für Bekleidungs-, Bezugs- und Auskleidungszwecke einsetzen.

**Patentansprüche**

1. Flexibles Sandwich-Flächengebilde, bestehend aus einer Hochfrequenz-schweißfähigen Schaumstoff-Kernschicht, auf der beiderseits Deckschichten angeordnet sind, von denen mindestens eine aus einem Hochfrequenzschweißfähigen textilen Flächengebilde mit einem Anteil von mindestens 20 Gew.-% eines Garns aus synthetischen Spinnfasern und/oder Filamenten aus Vinylpolymeren und/ oder -Copolymeren besteht, dessen Erweichungspunkt mindestens 50° C niedriger liegt als der Erweichungspunkt des restlichen Garns, wobei die Kettfäden des textilen Flächengebildes aus Filamentgarnen des höherschmelzenden Materials bestehen.

2. Flexibles Sandwich-Flächengebilde nach Anspruch 1, dadurch gekennzeichnet, daß auf die Hochfrequenzschweißfähige Deckschicht ein weiteres Flächengebilde mittels Hochfrequenz aufgeschweißt ist.

3. Flexibles Sandwich-Flächengebilde nach Anspruch 2, dadurch gekennzeichnet, daß das weitere Flächengebilde aus einem textilen Flächengebilde oder einer Kunststoffolie oder einer Kombination aus beiden besteht und als Halte- oder Befestigungsmittel ausgebildet ist.

**Claims**

1. A flexible sandwich surface structure consisting of a foam core layer which can be welded at a high frequency, on which facings are arranged on both sides, one of which, at least, consists of a textile surface structure which can be welded at a high frequency, with a proportion of yarn of at least 20% by weight made of synthetic textile fibres and/or filaments made of vinyl polymers and/or vinyl copolymers, the softening point of which is at least 50° C lower than the softening point of the remaining yarn, whereby the warp of the textile surface structure consists of filament yarns of the material which melts at a higher temperature.

2. A flexible sandwich surface structure according to claim 1, characterised in that a second surface structure is welded onto the facing which can be welded at a high frequency, by high-frequency welding.

3. A flexible sandwich surface structure according to claim 2, characterised in that the other surface structure consists of a textile surface structure or a plastic film, or a combination of both of these, and is formed into a holding agent or a fixing agent.

**Revendications**

1. Produit stratifié plat et souple, constitué d'une âme en matière mousse susceptible d'être

**0 064 756**

soudée par haute fréquence, sur les deux côtés de laquelle sont déposées des couches extérieures, dont l'une au moins est constituée d'un produit textile plat, susceptible d'être soudé par haute fréquence et ayant une proportion d'au moins 20% en poids d'un fil en fibres synthétiques découpées et/ou en filaments de polymères et/ou de copolymères vinyliques, dont le point de ramollissement est inférieur, d'au moins 50°C, au point de ramollissement du reste du fil, les fils de chaîne du produit textile plat étant constitué de fils continus en la matière ayant le point de fusion le plus élevé.

2. Produit stratifié plat et souple, suivant la revendication 1 caractérisé en ce que sur la couche extérieure susceptible d'être soudée est soudé un autre produit plat au moyen de la haute fréquence.

3. Produit stratifié plat et souple, suivant la revendication 2, caractérisé en ce que l'autre produit plat est constitué d'un produit textile plat ou d'une feuille de matière plastique ou d'une association des deux et est agencé en moyen de maintien ou de fixation.